# EUROPÄISCHE PATENTSCHRIFT

(11) **EP 0 466 746 B1**
(45) Veröffentlichungstag und Bekanntmachung des Hinweises auf die Patenterteilung: **29.06.1994**
(21) Anmeldenummer: 90905470.2
(22) Anmeldetag: 05.04.1990
(51) Int. Cl.: B60K 17/04, F16H 57/04, B60T 1/06

(54) **TRIEBACHSE**
DRIVE SHAFT
ESSIEU MOTEUR

(30) Priorität: 08.04.1989 DE 3911518
(43) Veröffentlichungstag der Anmeldung: 22.01.1992
(73) Patentinhaber: ZF FRIEDRICHSHAFEN Aktiengesellschaft, 88038 Friedrichshafen (DE)
(72) Erfinder: SCHEIBER, Friedrich, D-8391 Tiefenbach (DE); BIER, Waldemar, D-8390 Passau 17 (DE); SONNLEIRNER, Hermann, D-8395 Hauzenberg (DE); KÜHNER, Karl, D-7990 Friedrichshafen (DE); LOMMEL, Albrecht, D-7990 Friedrichshafen (DE)
(86) Internationale Anmeldenummer: EP9000536
(87) Internationale Veröffentlichungsnummer: WO9011907

(56) Entgegenhaltungen:
- EP-A- 076 387
- EP-A- 0 058 107
- DE-B- 1 047 820
- FR-A- 2 535 254
- GB-A- 590 867
- GB-A- 989 280
- US-A- 1 760 356
- US-A- 3 182 527
- US-A- 3 847 249
- US-A- 4 391 351

## Beschreibung

Die Erfindung bezieht sich auf eine Triebachse mit einem Achskörper, an dem an beiden Enden Radköpfe befestigt sind und bei dem ein Achsgehäuse ein Ausgleichsgetriebe umgibt, das mit einem Antriebsritzel über ein Tellerrad und Ausgleichs- sowie Achskegelräder und Achshalbwellen mit Radnaben, die die Radköpfe begrenzen, triebmäßig verbunden ist, wobei zwischen den Radnaben und dem Achsgehäuse eine kommunizierende Verbindung zum Austausch von Kühlmittel besteht.

Eine Triebachse der eingangs genannten Art ist aus der US-A-43 91 351 bekannt geworden. Innerhalb der Radköpfe dieser Triebachse ist jeweils eine Lamellenbremse und ein Planetengetriebe angeordnet. Jede Lamellenbremse wird mit Öl gekühlt, das aus dem Achsgehäuse des Ausgleichsgetriebes über Tragrohre, die von den Achshalbwellen durchsetzt sind, den Radköpfen zuläuft. Der Austausch von Kühlmittel im Inneren des Achskörpers vom Achsgehäuse zu den Radköpfen und umgekehrt ist bei der bekannten Konstruktion völlig unzureichend. Im wesentlichen ist er nur darauf zurückzuführen, daß das im Inneren des Achskörpers befindliche Öl durch die Rotation des Ausgleichsgetriebes bzw. des Tellerrads in Bewegung gehalten wird. Eine merkliche Zirkulation des Öls kann nicht stattfinden, da der überwiegende Volumenanteil des Öls durch das Tellerrad und das Antriebsritzel zwar hochgeschleudert und umgewälzt wird, jedoch hierbei stationär im Achsgehäuse des Ausgleichsgetriebes verbleibt. Die Folge hiervon sind hohe Planschverluste und eine unzureichende Kühlung der Lamellenbremsen.

Bei schrägstehender Triebachse besteht schließlich die Gefahr, daß ein Radkopf leerläuft, so daß die Kühlung der Lamellenbremsen insgesamt nicht gewährleistet ist.

Der Erfindung liegt, ausgehend von einer Triebachse der eingangs genannten Art, die Aufgabe zugrunde, durch einfache Maßnahmen die Kühlung der Lamellenbremsen zu verbessern.

Die Erfindung löst die gestellte Aufgabe durch Fang- und Leitelemente im Bereich des Tellerrads, durch die bei Rotation des Tellerrads Kühlmittel aus dem Achsgehäuse unter Absenkung des Kühlmittelspiegels in die Radköpfe verlagert wird. Durch die vorgeschlagene Verteilung des Kühlmittels durch Fang- und Leitelemente wird sichergestellt, daß ein relativ großer Anteil des Kühlmittelvolumens in den Radköpfen, also an den Stellen, wo überschüssige Reibungswärme anfällt und abzuführen ist, zur Verfügung steht. Die angesprochene Bauart der erfindungsgemäßen Triebachse, bei der innerhalb der Radköpfe jeweils die Lamellenbremse und das Planetengetriebe - von der Radnabe umgeben - angeordnet sind, schafft die Voraussetzungen zur Aufnahme des überwiegenden Anteils des Kühlmittelvolumens. Schon sehr geringe Drehzahlen führen zur Befüllung der Radköpfe. Die Anordnung ist ferner unempfindlich gegenüber Fremdkörpern. Mit der vorgeschlagenen Lösung läßt sich ein Kühlmittelkreislauf aufrechterhalten, der durch weitere wesentliche Vorteile gekennzeichnet ist: Die Absenkung des Kühlmittelspiegels im Achsgehäuse reduziert die Planschverlustleistung. Geeignete Fang- und Leitelemente können kostengünstig zur Verfügung gestellt werden, so daß sich die Triebachse nicht nennenswert verteuert. Da der Austausch des Kühlmittels auch im Achsinneren stattfindet, steht eine große Fläche zur Wärmeabfuhr zur Verfügung. Zusammen mit der Anhebung des Kühlmittelspiegels in den Radköpfen läßt sich das Zeit- und Beharrungsverhalten, d. h. der zeitliche Verlauf des Temperaturanstiegs bis zum Erreichen eines oberen Wertes, sehr günstig beeinflussen. Dies gilt insbesondere für Triebachsen von schweren Nutzfahrzeugen, bei denen die Lamellenbremsen in sehr kurzen Zeitintervallen - bei voller Motorleistung - betätigt werden.

Bekannt sind ferner Triebachsen abweichender Bauart, bei denen die Lamellenbremsen in einem separaten Gehäuse, von den Planetengetrieben räumlich getrennt, untergebracht sind (z. B. EP-A-00 76 367). Die Lamellenbremsen liegen hier im Kühlmittelkreislauf einer Pumpe. Der kontinuierlich geförderte Kühlmittelstrom ist unmittelbar drehzahlabhängig. Demzufolge muß die Pumpe groß dimensioniert sein, um auch bei geringen Drehzahlen ausreichend Kühlmittel zu fördern, was die Triebachse verteuert. Bei dieser Bauart ist insbesondere nachteilig, daß Schwankungen oder auch kurze Unterbrechungen des Kühlmittelstroms, wie sie z. B. durch im Kühlmittel befindliche Fremdkörper verursacht werden, zur Überhitzung der Lamellenbremsen führen.

In Versuchen hat es sich als besonders günstig herausgestellt, die Verlagerung des Kühlmittels in der Triebachse derart vorzunehmen, daß die Radköpfe zu etwa zwei Drittel ihres Volumens gefüllt sind. Diese Angabe gibt Durchschnittswerte wieder, wie sie beim Einsatz eines Nutzfahrzeuges, beispielsweise eines Radladers im Betriebsfall "Laden" auftreten. Hier ist vorwiegend der zweite Gang geschaltet, und die Lamellenbremsen werden etwa 5- bis 7mal in der Minute betätigt. Unter diesen Einsatzbedingungen lassen sich die Höchsttemperaturen des Kühlmittels deutlich unterhalb einer zulässigen Grenztemperatur halten.

Bei einer ersten Konstruktionsalternative sind die Fang- und Leitelemente über Rohrleitungen mit den Radköpfen und die Radköpfe über den Achskörper mit dem Achsgehäuse verbunden (Anspruch 3). Bei dieser Anordnung bilden die Rohrleitungen selbst einen Bestandteil der Leitelemente.

Bei einer weiteren Konstruktionsvariante sind die Fang- und Leitelemente so angeordnet und ausgebildet, daß sie das Kühlmittel über Achsrohre des Achskörpers den Radköpfen zuleiten. Die Radköpfe sind dann über Rohrleitungen mit dem Achsgehäuse verbunden (Anspruch 4). Die Bevorzugung der einen oder anderen Lösung hängt in erster Linie von der Größe des Achsgehäuses und auch von der Länge der Achsrohre des Achskörpers ab.

Nach einem weiteren vorteilhaften Merkmal der Erfindung sind die Fang- und Leitelemente von mindestens einem Auffangbehälter gebildet, der am Umfang des Tellerrads - oberhalb des Kühlmittelspiegels im Achsgehäuse - angeordnet, mit einer Öffnung der Drehrichtung des Tellerrads zugekehrt und mit einem Boden an die Rohrleitungen angeschlossen ist (Anspruch 5). Der vorgeschlagene Auffangbehälter stellt ein einfaches, preiswertes Bauteil dar. Insgesamt ist die Konstruktion, bestehend aus dem ohnehin vorhandenen Tellerrad und dem Auffangbehälter sowie den angeschlossenen Rohrleitungen robust, preiswert und vor allem völlig unempfindlich gegenüber von im Kühlmittel mitgeführten Fremdkörpern.

Durch die Gestaltung des Auffangbehälters, wie sie insbesondere in den Ansprüchen 6 bis 8 näher erläutert ist, läßt sich die Abstreif- und Umleitwirkung optimieren.

Bei einer Konstruktion, bei der das Kühlmittel über Achsrohre den Radköpfen zugeleitet wird, bestehen die Fang- und Leitelemente aus etwa-radikal gerichteten Abstreifern, die in die Bewegungsbahn des vom Tellerrad geschöpften Kühlmittels ragen. Diese Abstreifer sind vorzugsweise auf der Seite des Tellerrads angeordnet, die der Verzahnung abgewandt ist (Ansprüche 9 und 10).

Die Abstreifer fangen bzw. streifen das vom Tellerrad aus dem Achsgehäuse geschöpfte Kühlmittel ab und lenken es in Richtung auf die Radköpfe um. Hierzu haben sie - gesehen in Draufsicht - etwa die Form von Viertelkreisen, die in Richtung auf den Radkopf keilförmig zusammenlaufen (Anspruch 12).

Um die Fang- und Leitelemente nicht beidseitig vom Tellerrad anordnen zu müssen, sind die Achsrohre nach einem weiteren vorteilhaften Merkmal der Erfindung in ihrem unteren Bereich vom Achsgehäuse abgeschottet und durch einen Kanal miteinander verbunden. Durch diese Maßnahme ist sichergestellt, daß - bei einseitig angeordneten Fang- und Leitelementen - beide Radköpfe mit Kühlmittel versorgt werden. Vorzugsweise ist der Kanal innerhalb der Gehäusewandung des Achskörpers eingelassen.

Eine einfache Abschottung der Achsrohre vom Sammelbehälter ergibt sich durch die Verwendung eines Achseinsatzes (Anspruch 15).

Die in den Patentansprüchen 16 bis 20 vorgeschlagenen Merkmale befassen sich mit weiteren baulichen Ausgestaltungen der erfindungsgemäßen Triebsachse. Besonders vorteilhaft ist es, den inneren Lamellenträger der Lamellenbremse als Förderrad für das Kühlmittel auszubilden. Hierzu weist es Förderelemente auf. Bei einer vorteilhaften Ausführungsform sind innerhalb der Radköpfe jeweils eine Lamellenbremse und ein Planetengetriebe gelagert. Ein derartiger Radkopf zeichnet sich durch ein relativ großes Innenvolumen zur Aufnahme von Kühlmittel aus. Dieses Volumen kann zusätzlich dadurch vergrößert werden, daß jede Radnabe Kammern zur Aufnahme von Kühlmittel aufweist.

Weitere wesentliche Merkmale und die daraus resultierenden Vorteile sind der nachfolgenden Beschreibung zweier Ausführungsbeispiele der Erfindung anhand der Zeichnungen zu entnehmen. Es zeigen:
- Fig. 1: eine Teilansicht einer Triebachse in geschnittener Darstellung;
- Fig. 2 bis Fig. 4: die Ausgestaltung und Anordnung von ersten Fang- und Leitelementen innerhalb eines Achskörpers;
- Fig. 5: eine Teilansicht auf einen weiteren Achskörper mit weiteren Fang- und Leitelementen;
- Fig. 6: den Querschnitt durch den Achskörper entlang der Linie VI-VI in Fig. 5;
- Fig. 7: weitere Einzelheiten des Achskörpers nach den Fig. 5 und 6.

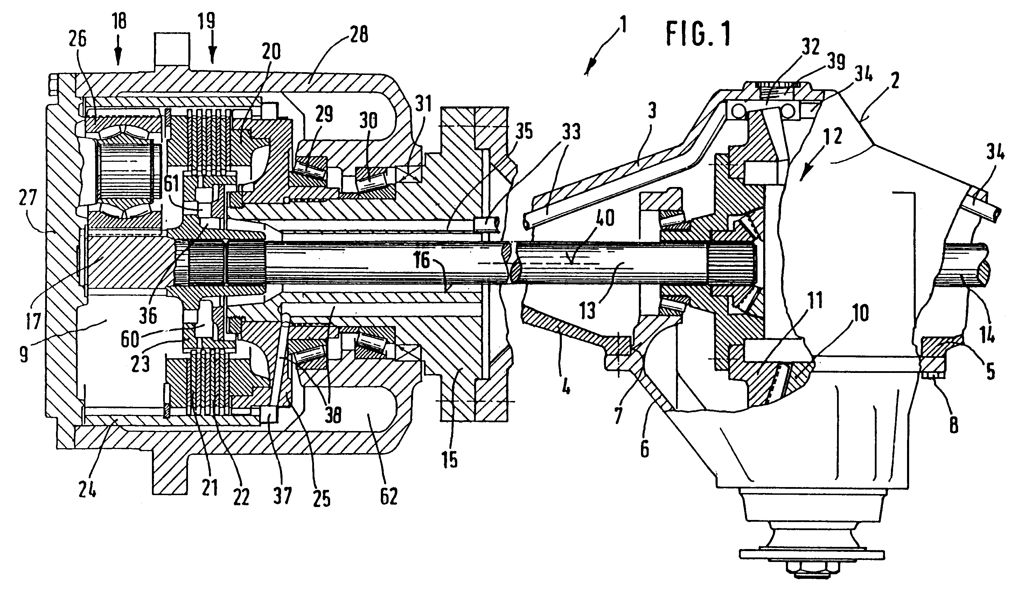

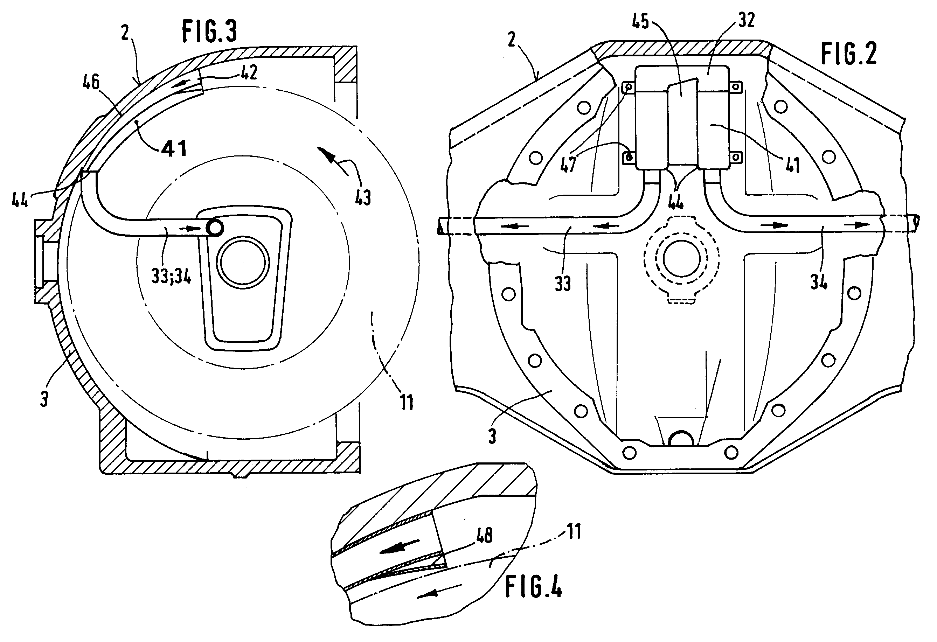

In Fig. 1 ist eine Triebachse 1 mit ihren Hauptbestandteilen schematisch im Längs-/Querschnitt dargestellt. Die Hauptbestandteile der Triebachse 1 sind folgende: Ein Achskörper 2, an dessen mittleren Bereich, dem Achsgehäuse 3, sich Achsrohre 4 und 5 anschließen und einem Achseinsatz 6, der in einer Öffnung 7 des Achsgehäuses 3 zentriert und durch mehrere Schrauben 8 mit diesem fest verschraubt ist. Die Achsrohre 4 und 5 tragen an ihren äußeren Enden Radköpfe 9, von denen ein Radkopf 9 in der Zeichnung wiedergegeben ist.

Im Achseinsatz 6 ist ein Antriebsritzel 10 drehbar gelagert. Es steht mit einem Tellerrad 11 in Antriebsverbindung. Das Tellerrad 11 ist Bestandteil eines Ausgleichsgetriebes 12 mit Ausgleichs- und Achskegelrädern. Vom Ausgleichsgetriebe 12 führen Achshalbwellen 13 und 14 zu den Radköpfen 9.

Der wesentliche Aufbau der Radköpfe wird nachfolgend anhand des in der Zeichnung links liegenden Radkopfes 9 beschrieben:
Eine Hohlachse 15 ist mit dem äußeren Ende des Achsrohres 4 fest verschraubt. Die Achshalbwelle 13 durchsetzt eine Bohrung 16 der Hohlachse 15 und endet in einem Sonnenrad 17 eines Planetengetriebes 18. Zwischen der Hohlachse 15 und dem Planetengetriebe 18 ist eine Lamellenbremse 19 eingeschaltet, die hydraulisch mit Hilfe eines Kolbens 20 betätigbar ist.

Die Lamellenbremse 19 weist innere und äußere Bremslamellen 21 und 22 auf. Die inneren Bremslamellen 21 stützten sich auf einem inneren Lamellenträger 23 ab, der mit der Achshalbwelle 13 drehfest verbunden ist. Der Lamellenträger 23 ist als Förderrad 60 mit Förderelementen 61 ausgebildet.

Die äußeren Bremslamellen 22 sind in einem Hohlrad 24 des Planetengetriebes 18 abgestützt. Das Hohlrad 24 wird von einem Hohlradträger 25 gehalten und drehfest mit der Hohlachse 15 verbunden.

Das Planetengetriebe 18 wird durch mehrere Planetenräder 26 vervollständigt, die an einem Steg 27, der gleichzeitig die Funktion eines Deckels übernimmt, abgestützt sind. Der Deckel ist Bestandteil einer Radnabe 28, die über Lager 29 und 30 drehbar auf der Hohlachse 15 bzw. dem Hohlradträger 25 abgestützt und mittels einer Dichtung 31 nach außen hin abgedichtet ist. Die Radnabe 28 stellt eine äußere Begrenzung für den Radkopf 9 dar.

Innerhalb des Achsgehäuses 3 des Achskörpers 2 sind Fang- und Leitelemente 32 angeordnet. die Fang- und Leitelemente 32 sind dem Tellerrad 11 zugeordnet und über Rohrleitungen 33 und 34 mit den Radköpfen 9 verbunden. Hierbei führt die Rohrleitung 33 in eine parallel zur Achshalbwelle 13 verlaufende Zuleitung 35 in der Hohlachse 15. Die Zuleitung 35 mündet in einen Förderspalt 36 des Lamellenträgers 23 der Lamellenbremse 19.

Am Umfang des Hohlrads 24 befindet sich ein Sammelring 37, der über eine Ableitung 38 mit dem Innenraum des Achsrohrs 4 verbunden ist.

Aus dem bisher gesagten folgt, daß die Fang- und Leitelemente 32 über Rohrleitungen 33 und 34 mit den Radköpfen 9 und die Radköpfe 9 über den Achskörper 2 (Innenraum der Achsrohre 4 und 5) mit dem Achsgehäuse 3 verbunden sind.

Zur Kühlung der Lamellenbremsen 19 ist der Achskörper 2 der Triebachse 1 mit Kühlmittel gefüllt. Zur Füllung findet eine - einzige - verschließbare Einfüllöffnung 39 Verwendung. Bei Stillstand aller rotierenden Teile der Triebachse reicht der Kühlmittelspiegel 40 im Achsgehäuse 3 bis zur Mitte der Achshalbwellen 13 und 14 - bezogen auf die normale Einbaulage der Triebachse 1.

Während des Betriebs, bei dem vom Antriebsritzel 10 über das Tellerrad 11, das Ausgleichsgetriebe 12 und die Achshalbwellen 13 und 14, die Planetengetriebe 18 und die Radnaben 28 Antriebsleistung auf die selbst nicht dargestellten Triebräder übertragen wird, stellt sich folgende Verlagerung des Kühlmittels in der Triebachse 1 ein:
Das rotierende Tellerrad 11 schöpft Kühlmittel aus dem Achsgehäuse 3 in Richtung auf die Fang- und Leitelemente 32. Die Fang- und Leitelemente 32 übernehmen das vom Tellerrad 11 geschöpfte Kühlmittel und leiten es durch die Rohrleitungen 33 und 34 den Innenräumen der Radköpfe 9 zu. Das Kühlmittel durchläuft die Lamellenbremsen 19 von innen nach außen und umspült die Planetengetriebe 18. Der Austausch des Kühlmittels von den Radköpfen 9 zum Achsgehäuse 3 erfolgt über die Ableitung 38 und den Innenraum des Achsrohrs 4 bzw. 5 des Achskörpers 2.

Im übrigen erfolgt die Kühlmittelzirkulation in der Weise, daß das Kühlmittel durch die Fang- und Leitelemente 32 innerhalb der Triebachse 1 verlagert wird: Im Achsgehäuse 3 wird der Kühlmittelspiegel abgesenkt. Das den Radköpfen 9 zugeführte Kühlmittel führt durch deren Befüllung zu einer Anhebung des Kühlmittelspiegels in den Radköpfen 9. Durch das Betätigen der Lamellenbremsen 19 erhöht sich die Temperatur des in den Radköpfen 9 zirkulierenden Kühlmittels. Da das erhitzte Kühlmittel über die Innenräume der Achsrohre 4 und 5 in das Achsgehäuse 3 zurückfließt, steht eine große Oberfläche zur Abkühlung des Kühlmittels zur Verfügung.

Es hat sich als besonders vorteilhaft herausgestellt, die Fang- und Leitelemente 32 so auszulegen, daß sich während des Betriebs eine Verlagerung des Kühlmittels innerhalb der Triebachse derart einstellt, daß etwa zwei Drittel des verfügbaren Innenvolumens der Radköpfe 9 mit Kühlmittel gefüllt ist. Durch die Absenkung des Kühlmittelspiegels im Achsgehäuse 3 lassen sich die Planschverluste an dieser Stelle erheblich vermindern. Andererseits wird innerhalb der Radköpfe 9 ausreichend Kühlmittelvolumen bereitgestellt und durchgesetzt, so daß die Lamellenbremsen 19 wirksam gekühlt werden können. Insgesamt gesehen wird durch die Verlagerung des Kühlmittels das Zeit- und Beharrungsverhalten der Triebachse 1 in bezug auf die Temperatur des Kühlmittels in der Weise verändert, daß ein langsamer Temperaturanstieg und ein Beharren der Kühlmitteltemperatur unterhalb einer maximal zulässigen Grenztemperatur meßbar ist.

Die Fang- und Leitelemente 32 zeichnen sich zudem durch ihre einfache Bauweise aus. Die Mittel, die der Verlagerung des Kühlmittels innerhalb der Triebachse 1 dienen, sind bei geringen Drehzahlen wirksam und unempfindlich gegenüber von im Kühlmittel mitgeführten Fremdkörpern, so daß auch die Zuverlässigkeit der Triebachse 1 in vollem Umfang gewährleistet ist.

Die Fig. 2 zeigt insbesondere die Ansicht auf die Fang- und Leitelemente 32 bei entferntem Achseinsatz 6. Die Fang- und Leitelemente 32 werden von einem Auffangbehälter 41 gebildet, der, wie auch aus Fig. 3 ersichtlich, am Umfang des Tellerrads 11 - oberhalb des Kühlmittelspiegels 40 im Achsgehäuse 3 - angeordnet ist. Der Auffangbehälter 41 ist mit einer Öffnung 42 der Drehrichtung 43 des Tellerrads 11 zugekehrt. Ein Boden 44 ist mit den Rohrleitungen 33 und 34 verbunden. Der Auffangbehälter 41 umgibt das Tellerrad 11 sattelförmig (Fig. 2 und 3). Die dem Tellerrad 11 zugewandte Unterseite 45 des Auffangbehälters 41 ist der Außenkontur des Tellerrads 11 angepaßt (vgl. auch Fig. 1).

Im übrigen ist der Auffangbehälter 41 - gesehen in Seitenansicht des Tellerrads 11, Fig. 3 - trichterförmig ausgebildet. Die Weite der Öffnung 42 ist größer als die Breite des Bodens 44. Die dem Achskörper 2 zugewandte Oberseite 46 des Auffangbehälters 41 ist der Innenkontur des Achskörpers angepaßt, so daß der Auffangbehälter 41 über Befestigungsfahnen 47 und geeignete Befestigungsmittel mit dem Achskörper 2 z. B. durch Schrauben verbunden werden kann.

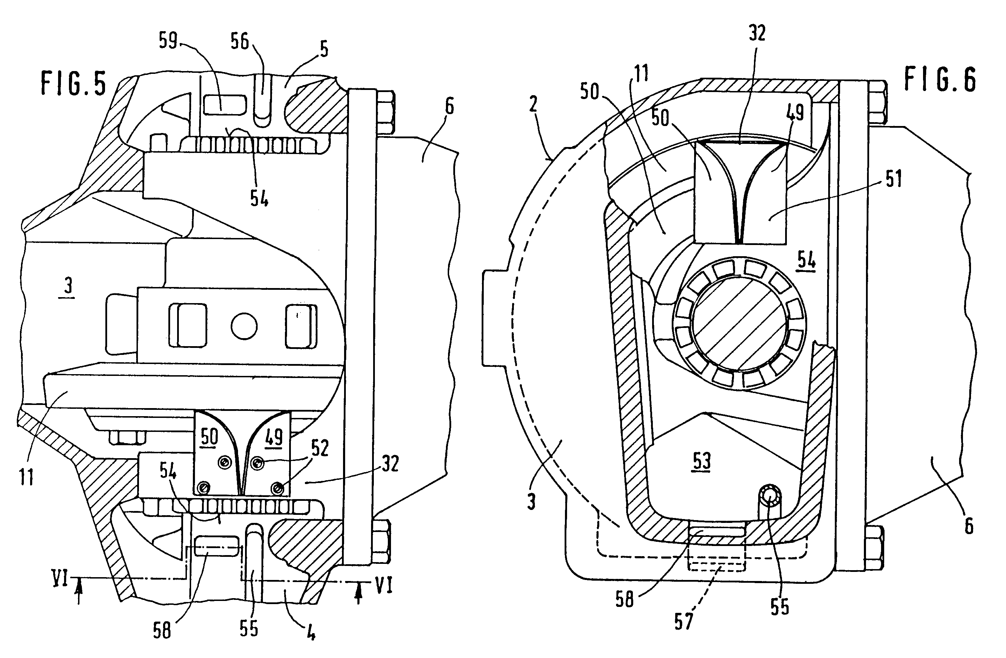

Die Öffnung 42 des Auffangbehälters 41 ist an ihrer dem Tellerrad angrenzenden Unterseite (bei 48) tangential zum Außenumfang des Tellerrads 11 gerichtet (vgl. Fig. 4).

Bei der vorstehend erläuterten Konstruktionsvariante finden Fang- und Leitelemente 32 in Form eines - einzigen - Auffangbehälters 41 Verwendung. Die Anordnung ist so getroffen, daß die Fang- und Leitelemente das Kühlmittel in der hauptsächlich anzutreffenden Fahrtrichtung (Vorwärtsfahrt) in Richtung auf die Radköpfe 9 verteilen. Da das Tellerrad 11 in beiden Drehrichtungen Kühlmittel aus dem Achsgehäuse 3 schöpft, können, anstelle eines einzigen Auffangbehälters 41, auch zwei Auffangbehälter 41 vorgesehen sein.

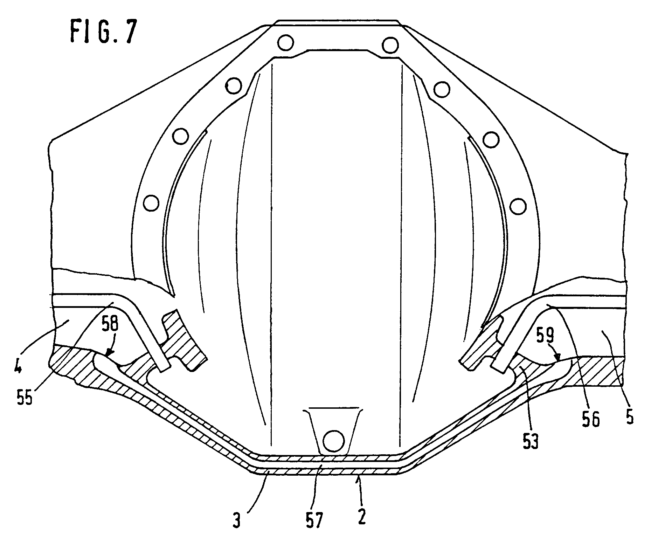

Anhand der Fig. 5 bis 7 wird eine weitere Konstruktionsvariante erläutert, bei der Fang- und Leitelemente 32 vorgesehen sind, die in beiden Drehrichtungen des Tellerrads 11 das vom Tellerrad 11 aus dem Achsgehäuse 3 geschöpfte Kühlmittel abstreifen. Die Fang- und Leitelemente 32 bestehen hier aus etwa vertikal gerichteten Abstreifern 49 und 50, die mit einem Boden 51 zu einer Montageeinheit fest verbunden sind. Diese Montageeinheit ist über Schrauben 52 (Fig. 5) am Achseinsatz 6 verschraubt.

Bei der beschriebenen Konstruktionsvariante ist insofern eine Besonderheit festzustellen, als das Achsgehäuse 3 von den Achsrohren 4 und 5 teilweise abgeschottet ist. Die Abschottung erfolgt z. B. durch Stege 53 in den Achsrohren 4 und 5 und/oder durch seitliche Begrenzungsflächen 54 des Achseinsatzes 6.

Eine weitere Abweichung von der im Zusammenhang mit der Erläuterung der Fig. 1 bis 4 geschilderten Konstruktion besteht bei der in Rede stehenden Ausführungsform darin, daß das Kühlmittel über die Innenräume der Achsrohre 4 und 5 den Radköpfen 9 (über den Ringspalt zwischen der Bohrung 16 in der Hohlachse 15 und der Achshalbwelle 13 bzw. 14) zufließt. Die Ableitung des Kühlmittels aus den Radköpfen 9 zum Achsgehäuse 3 wird hier über Rohrleitungen 55 und 56 vorgenommen. Die Rohrleitungen 55 und 56 sind an die Ableitungen 38 der Hohlachsen 15 angeschlossen und münden in das Achsgehäuse 3. In diesem Ahschnitt durchsetzen die Rohre 55 und 56 die Stege 53 der Achsrohre 4 und 5.

Da die Fang- und Leitelemente 32 bei der Konstruktionsvariante nach den Fig. 5 bis 7 auf einer Seite des Tellerrads 11 angeordnet sind, wird - unabhängig von der Drehrichtung des Tellerrads 11 - jeweils primär nur das Achsrohr 4 mit Kühlmittel gefüllt. Es muß also hier dafür Sorge getragen werden, daß das Kühlmittel auch dem Innenraum des Achsrohres 5 zufließt. Hierzu ist ein Kanal 57 vorgesehen, der innerhalb der Gehäusewandung des Achskörpers 2 in der Weise angeordnet ist, daß er über Öffnungen 58 und 59 die Innenräume der Achsrohre 4 und 5 miteinander verbindet und im übrigen das Achsgehäuse 3 unterquert. Die Trennung vom Innenraum des Achsgehäuses 3 ist erforderlich, um eine Vermischung des zu den Radköpfen 9 fließenden Kühlmittels mit dem in das Achsgehäuse 3 zurückfließenden Kühlmittels zu verhindern.

### Bezugszeichen

- 1: Triebachse
- 2: Achskörper
- 3: Achsgehäuse
- 4: Achsrohr
- 5: Achsrohr
- 6: Achseinsatz
- 7: Öffnung
- 8: Schrauben
- 9: Radköpfe
- 10: Antriebsritzel
- 11: Tellerrad
- 12: Ausgleichsgetriebe
- 13: Achshalbwelle
- 14: Achshalbwelle
- 15: Hohlachse
- 16: Bohrung
- 17: Sonnenrad
- 18: Planetengetriebe
- 19: Lamellenbremse
- 20: Kolben
- 21: innere Bremslamellen
- 22: äußere Bremslamellen
- 23: innerer Lamellenträger
- 24: Hohlrad
- 25: Hohlradträger
- 26: Planetenräder
- 27: Steg
- 28: Radnabe
- 29: Lager
- 30: Lager
- 31: Dichtung
- 32: Fang- und Leitelemente
- 33: Rohrleitung
- 34: Rohrleitung
- 35: Zuleitung
- 36: Förderspalt
- 37: Sammelring
- 38: Ableitung
- 39: Einfüllöffnung
- 40: Kühlmittelspiegel
- 41: Auffangbehälter
- 42: Öffnung
- 43: Drehrichtung des Tellerrads 11 (Vorwärtsfahrt)
- 44: Boden
- 45: Unterseite
- 46: Oberseite
- 47: Befestigungsfahnen
- 48: Unterseite, an das Tellerrad 11 angrenzend
- 49: Abstreifer
- 50: Abstreifer
- 51: Boden
- 52: Schrauben
- 53: Stege
- 54: Begrenzungsflächen
- 55: Rohrleitung
- 56: Rohrleitung
- 57: Kanal
- 58: Öffnung
- 59: Öffnung
- 60: Förderrad
- 61: Förderlemente
- 62: Kammern

## Patentansprüche

1. Triebachse (1) mit einem Achskörper (2), an dem an beiden Enden Radköpfe (9) befestigt sind und bei dem ein Achsgehäuse (3) ein Ausgleichsgetriebe (12) umgibt, das mit einem Antriebsritzel (10) über ein Tellerrad (11) und Ausgleichs- sowie Achskegelräder und Achshalbwellen (13, 14) mit Radnaben (28), die die Radköpfe (9) begrenzen, triebmäßig verbunden ist, wobei zwischen den Radnaben (28) und dem Achsgehäuse (3) eine kommunizierende Verbindung zum Austausch von Kühlmittel besteht,
**gekennzeichnet** durch Fang- und Leitelemente (32) im Bereich des Tellerrads (11), durch die bei Rotation des Tellerrads (11) Kühlmittel aus dem Achsgehäuse (3) unter Absenkung des Kühlmittelspiegels (40) in die Radköpfe (9) verlagert wird.

2. Triebachse nach Anspruch 1, **gekennzeichnet** durch die Verlagerung des Kühlmittels in der Triebachse (1) derart, daß die kühlmittelführenden Räume der Radköpfe (9) jeweils zu zwei Drittel ihres Volumens mit Kühlmittel gefüllt sind.

3. Triebachse nach Anspruch 2, dadurch **gekennzeichnet,** daß die Fang- und Leitelemente (32) über Rohrleitungen (33, 34) mit den Radköpfen (9) und die Radköpfe (9) über den Achskörper (2) mit dem Achsgehäuse (3) verbunden sind.

4. Triebsachse nach Anspruch 2, dadurch **gekennzeichnet,** daß die Fang- und Leitelemente (32) das Kühlmittel über Achsrohre (4, 5) des Achskörpers (2) den Radköpfen (9) zuleiten und die Radköpfe (9) über Rohrleitungen (55, 56) mit dem Achsgehäuse (3) verbunden sind.

5. Triebachse nach den Ansprüchen 1 bis 3, dadurch **gekennzeichnet,** daß die Fang- und Leitelemente (32) von mindestens einem Auffangbehälter (41) gebildet sind, der am Umfang des Tellerrads (11) - oberhalb des Kühlmittelspiegels (40) im Achsgehäuse (3) - angeordnet, mit einer Öffnung der Drehrichtung (43) des Tellerrads (11) zugekehrt und mit einem Boden (44) an die Rohrleitungen (33, 34) angeschlossen ist.

6. Triebsachse nach Anspruch 5, dadurch **gekennzeichnet,** daß der Auffangbehälter (41) das Tellerrad (11) - in Drehrichtung (43) auf das Tellerrad (11) gesehen - sattelförmig umgibt und, daß die dem Tellerrad (11) zugewandte Unterseite (45) des Auffangbehälters (41) der Außenkontur des Tellerrads (11) angepaßt ist.

7. Triebachse nach Anspruch 6, dadurch **gekennzeichnet,** daß der Auffangbehälter (41) - gesehen in Seitenansicht des Tellerrads (11) - trichterförmig verläuft, daß die Weite der Öffnung (42) größer als die Breite des Bodens (44) ist und, daß die dem Achskörper (2) zugewandte Oberseite der Innenkontur des Achskörpers (2) angepaßt ist.

8. Triebachse nach den Ansprüchen 5 bis 7, dadurch **gekennzeichnet,** daß - gesehen in Seitenansicht des Tellerrads (11) - die Öffnung (42) an ihrer dem Tellerrad (11) angrenzenden Unterseite (48) tangential zum Außenumfang des Tellerrads (11) gerichtet verläuft.

9. Triebachse nach Anspruch 4, dadurch **gekennzeichnet,** daß die Fang- und Leitelemente (32) aus etwa vertikal gerichteten Abstreifern (49, 50) bestehen, die in die Bewegungsbahn des vom Tellerrad (11) geschöpften Kühlmittels ragen.

10. Triebachse nach Anspruch 9, dadurch **gekennzeichnet,** daß die Abstreifer (45, 50) auf der Seite des Tellerrads (11) angeordnet sind, die der Verzahnung abgewandt ist.

11. Triebachse nach Anspruch 10, dadurch **gekennzeichnet,** daß die Abstreifer (49, 50) aus Blechstreifen bestehen, die mit einem Boden (51) zu einer Montageeinheit fest verbunden sind.

12. Triebsachse nach Anspruch 11, dadurch **gekennzeichnet,** daß die mit dem Boden (51) verbundenen Blechstreifen - gesehen in Draufsicht - etwa die Form von Viertelkreisen haben, die in Richtung auf den Radkopf (9) konvergieren.

13. Triebachse nach den Ansprüchen 9 bis 12, dadurch **gekennzeichnet,** daß die Achsrohre (4, 5) in ihrem unteren Bereich vom Achsgehäuse (3) abgeschottet und durch einen Kanal (57) miteinander verbunden sind.

14. Triebachse nach Anspruch 13, dadurch **gekennzeichnet,** daß der Kanal (57) innerhalb der Gehäusewandung des Achskörpers (2) - das Achsgehäuse (3) unterquerend - eingelassen ist.

15. Triebachse nach Anspruch 14, dadurch **gekennzeichnet,** daß die Achsrohre (4, 5) vom Achsgehäuse (3) durch einen Achseinsatz (6) teilweise abgeschottet sind.

16. Triebachse nach einem den Ansprüche 3 oder 4, dadurch **gekennzeichnet,** daß der Zulauf des Kühlmittels im Übergangsbereich zu den Radköpfen (9) in Umfangsnähe der Achshalbwellen (13, 14) folgt.

17. Triebachse nach Anspruch 1, dadurch **gekennzeichnet,** daß die Lamellenbremse (19) einen inneren Lamellenträger (23) zur Abstützung von inneren Bremslamellen (21) aufweist, und daß der Lamellenträger (23) als Förderrad (60) mit einem Förderspalt (36) für das Kühlmittel ausgebildet ist.

18. Triebachse nach Anspruch 17, dadurch **gekennzeichnet,** daß das Förderrad (60) Förderelemente (61) aufweist.

19. Triebachse nach Anspruch 1, dadurch **gekennzeichnet,** daß innerhalb der Radköpfe (9) jeweils eine Lamellenbremse (19) und ein Planetengetriebe (18) gelagert sind.

20. Triebachse nach Anspruch 19, dadurch **gekennzeichnet,** daß jede Radnabe (28) Kammern (62) zur Aufnahme von Kühlmittel aufweist.

## Claims

1. Driving axle (1) with an axle body (2), to which wheel heads (9) are fixed at both ends and wherein an axle housing (3) surrounds a differential gear (12), which is drivingly connected to a drive pinion (10) via a ring gear (11) and differential gear as well as via axle bevel gears and axle half shafts (13, 14) with wheel hubs (28) defining the wheel heads (9), and wherein an intercommunicating connexion for the exchange of coolant exists between the wheel hubs (28) and the axle housing (3), characterised by collecting and guide elements (32) in the region of the ring gear (11), through which, upon rotation of the ring gear (11), coolant is displaced from the axle housing (3) into the wheel heads (9), thus lowering of the coolant level (40).

2. Driving axle according to claim 1, characterised by the displacement of coolant in the drive axle (1) in such a manner that the coolant-guiding spaces in the wheel heads (9) are each filled with coolant to two-thirds of their volume.

3. Driving axle according to claim 2, characterised in that the collecting and guide elements (32) are connected to the wheel heads (9) via conduits (33, 34) and the wheel heads (9) are connected to the axle housing (3) via the axle body (2).

4. Driving axle according to claim 2, characterised in that the collecting and guide elements (32) supply coolant to the wheel heads (9) via tubes (4,5) in the axle body (2), and the wheel heads (9) are connected to the axle housing (3) via conduits (55, 56).

5. Driving axle according to claims 1 to 3, characterised in that the collecting and guide elements (32) are formed of at least one collecting vessel (41), which is disposed at the circumference of the ring gear (11) - above the coolant level (40) in the axle housing (3) - with an aperture facing the direction of rotation (43) of the ring gear (11) and is connected to the conduits (33, 34) at one end (44).

6. Driving axle according to claim 5, characterised in that, viewed in the direction of rotation (43) towards the ring gear (11), the collecting vessel (41) surrounds the ring gear (11) like a saddle, and in that the under-side (45) of the collecting vessel (41) facing the ring gear (11) matches the outer contour of the ring gear (11).

7. Driving axle according to claim 6, characterised in that, from a side view of the ring gear (11), the collecting vessel (41) extends in the form of a funnel, in that the width of the aperture (42) is larger than the breadth of the end (44), and in that the upper face associated with the axle body (2) matches the inner contour of the axle body (2).

8. Driving axle according to claims 5 to 7, characterised in that, from a side view of the ring gear (11), the aperture (42) extends at its under-side (48) abutting the ring gear (11) with a tangential orientation to the outer circumference of the ring gear (11).

9. Driving axle according to claim 4, characterised in that the collecting and guide elements (32) consist of approximately vertically aligned strippers (49, 50), which project into the path of motion of the coolant drawn by the ring gear (11).

10. Driving axle according to claim 9, characterised in that the strippers (49, 50) are disposed on the side of the ring gear (11) remote from the splines.

11. Driving axle according to claim 10, characterised in that the strippers (49, 50) consist of sheet-metal strips rigidly connected to an assembly unit by one end (51).

12. Driving axle according to claim 11, characterised in that, viewed in plan, the sheet-metal strips connected to the ends (51) have the approximate shape of quarter-circles converging in the direction of the wheel head (9).

13. Driving axle according to claims 9 to 12, characterised in that the axle tubes (4, 5) are partitioned off from the axle housing (3) in their lower region and are connected together by channel (57).

14. Driving axle according to claim 13, characterised in that the channel (57) is countersunk into the housing wall of the axle body (2) so as to cross under the axle housing (3).

15. Driving axle according to claim 14, characterised in that the axle tubes (4, 5) are partly partitioned off from the axle housing (3) by an axle insert (6).

16. Driving axle according to one of claims 3 or 4, characterised in that the supply of coolant to the wheel heads (9) in the joining region follows close to the circumference of the axle half-shafts (13, 14).

17. Driving axle according to claim 1, characterised in that the disc brake (19) has an inner disc carrier (23) for supporting inner brake discs (21), and in that the disc carrier (23) is formed as a conveyor wheel (60) with a conveyor gap (36) for the coolant.

18. Driving axle according to claim 17, characterised in that the conveyor wheel (60) has conveyor elements (61).

19. Driving axle according to claim 1, characterised in that a disc brake (19) and a planetary transmission (18) are housed within each wheel head (9).

20. Driving axle according to claim 19, characterised in that each wheel hub (28) has chambers (62) for holding coolant.

## Revendications

1. Essieu moteur (1) comportant un pont (2) aux deux extrémités duquel sont montés des réducteurs de roues (9) et dans lequel un carter d'essieu (3) entoure un différentiel (12) qui constitue une liaison motrice, au moyen d'une couronne de différentiel (11), de pignons satellites coniques et de demi-arbres (13, 14), entre un pignon d'entraînement (10) et des moyeux de roues (28) qui contiennent les réducteurs de roues (9), et où il existe une communication pour l'échange d'un fluide de refroidissement entre les moyeux de roues (28) et le carter d'essieu (3), **caractérisé** par des éléments collecteurs et directeurs (32) disposés à proximité de la couronne de différentiel (11) et au moyen desquels, lorsque cette couronne (11) tourne, du fluide de refroidissement est déplacé du carter d' essieu (3) aux réducteurs (9) avec abaissement du niveau (40) du fluide de refroidissement.

2. Essieu moteur selon la revendication 1, **caractérisé** en ce que le déplacement du fluide de refroidissement dans l'essieu (1) s'effectue de telle manière que les chambres qui contiennent le fluide dans les réducteurs (9) sont remplies de fluide aux deux tiers de leur volume.

3. Essieu moteur selon la revendication 2, **caractérisé** en ce que les éléments collecteurs et directeurs (32) sont raccordés aux réducteurs (9) par des tuyaux (33, 34) et en ce que les réducteurs (9) sont raccordés au carter d'essieu (3) par le pont (2).

4. Essieu moteur selon la revendication 2, **caractérisé** en ce que les éléments collecteurs et directeurs (32) conduisent le fluide de refroidissement aux réducteurs (9) par des tubes d'essieu (4, 5) du pont (2) et en ce que les réducteurs (9) sont raccordés au carter d'essieu (3) par des tuyaux (55, 56).

5. Essieu moteur selon les revendications 1 à 3, **caractérisé** en ce que les éléments collecteurs et directeurs (32) sont formés par au moins un récipient collecteur (41) disposé près de la périphérie de la couronne de différentiel (11) - au-dessus du niveau (40) du fluide dans le carter d' essieu (3) - et comportant une ouverture faisant face au sens de rotation (43) de ladite couronne (11) et un fond (44) raccordé auxdits tuyaux (33, 34).

6. Essieu moteur selon la revendication 5, **caractérisé** en ce que le récipient collecteur (41) - vu dans le sens de rotation (43) de la couronne de différentiel (11) - a une forme en selle qui entoure cette couronne (11) et en ce que la face inférieure (45) dudit récipient (41) du côté de la couronne (11) est adaptée au profil extérieur de la couronne (11).

7. Essieu moteur selon la revendication 6, **caractérisé** en ce que le récipient collecteur (41) - en vue latérale de la couronne de différentiel (11) - a une forme d'entonnoir, en ce que la largeur de son ouverture (42) est plus grande que celle de son fond (44) et en ce que sa face supérieure du côté du pont (2) est adaptée au profil intérieur du pont (2).

8. Essieu moteur selon les revendications 5 à 7, **caractérisé** en ce que - en vue latérale de la couronne de différentiel (11) - ladite ouverture (42) est orientée tangentiellement par rapport à la périphérie extérieure de la couronne (11) au voisinage de son côté inférieur (48) adjacent à la couronne (11).

9. Essieu moteur selon la revendication 4, **caractérisé** en ce que les éléments collecteurs et directeurs (32) comportent des déflecteurs (49, 50) orientés approximativement verticalement, qui interceptent la trajectoire du fluide de refroidissement puisé par la couronne de différentiel (11).

10. Essieu moteur selon la revendication 9, **caractérisé** en ce que les déflecteurs (49, 50) sont disposés du côté de la couronne (11) opposé à la denture.

11. Essieu moteur selon la revendication 10, **caractérisé** en ce que les déflecteurs (49, 50) sont constitués par des bandes de tôle qui sont fixées à une base (51) pour former une unité de montage.

12. Essieu moteur selon la revendication 11, **caractérisé** en ce que les bandes de tôle fixées à la base (51) présentent - en vue en plan - approximativement la forme de quarts de cercles qui convergent en direction du réducteur de roue (9).

13. Essieu moteur selon les revendications 9 à 12, **caractérisé** en ce que les tubes d' essieux (4, 5), dans leur partie inférieure, sont obturés par rapport au carter d'essieu (3) et sont raccordés l'un à l'autre par un canal (57).

14. Essieu moteur selon la revendication 13, **caractérisé** en ce que ledit canal (57) est intégré à la paroi du pont (2), en passant au bas du carter d'essieu (3).

15. Essieu moteur selon la revendication 14, **caractérisé** en ce que les tubes d' essieux (4, 5) sont partiellement obturés par rapport au carter d' essieu (3) au moyen d'un élément rapporté (6).

16. Essieu moteur selon l'une des revendications 3 ou 4, **caractérisé** en ce que l'arrivée du fluide de refroidissement dans la zone de raccordement aux réducteurs (9) s'effectue à proximité de la périphérie des demi-arbres (13, 14).

17. Essieu moteur selon la revendication 1, **caractérisé** en ce que le frein à disques multiples (19) comporte un porte-disques intérieur (23) pour supporter des disques intérieurs de frein (21) et en ce que ce porte-disques (23) est agencé en roue de pompe (60) avec une fente de passage (36) pour le fluide de refroidissement.

18. Essieu moteur selon la revendication 17, **caractérisé** en ce que la roue de pompe (60) comporte des éléments de refoulement (61).

19. Essieu moteur selon la revendication 1, **caractérisé** en ce que chacun des réducteurs de roues (9) contient un frein à disques multiples (19) et un engrenage planétaire (18).

20. Essieu moteur selon la revendication 19, **caractérisé** en ce que chaque moyeu de roue (28) comporte des chambres (62) pour contenir du fluide de refroidissement.
